# EUROPÄISCHE PATENTANMELDUNG

(11) **EP 3 401 145 A1**
(43) Veröffentlichungstag der Anmeldung: **14.11.2018**
(21) Anmeldenummer: 17170890.2
(22) Anmeldetag: 12.05.2017
(51) Int. Cl.: B60J 7/12, B29C 45/14, F16C 11/04

(54) **DREHGELENKANORDNUNG MIT EINEM MITTELS SPRITZGUSS GEFERTIGTEN GELENKBOLZEN**

(71) Anmelder: TB&C Technology GmbH, 35745 Herborn (DE)
(72) Erfinder: Groos, Hartmut, 35649 Bischoffen (DE); Faulstich, René, 35444 Biebertal (DE)
(74) Vertreter: Weilnau, Carsten

(57) **Zusammenfassung**

Die vorliegende Offenbarung betrifft eine Drehgelenkanordnung mit einem Basisteil (10) und mit einem Schwenkteil (20), die zueinander schwenkbar gelagert sind und welche jeweils eine Durchgangsöffnung (11, 21) aufweisen, die zumindest bereichsweise zueinander überlappend angeordnet sind und mit einem mittels Spritzguss gefertigten Gelenkbolzen (30), welcher einen strukturverstärkenden und in eine Kunststoffumspritzung (32) eingebetteten Einsatz (34) aufweist, welcher unter Bildung eines vorgegebenen Zwischenraums (5) zu einem Öffnungsrand (15, 25) oder einer Öffnungswand (16, 26) der Durchgangsöffnungen (11, 21) in den Durchgangsöffnungen (11, 21) des Basisteils (10) und des Schwenkteils (20) angeordnet ist.

## Beschreibung

Die vorliegende Entwicklung betrifft eine Drehgelenkanordnung mit einem Basisteil und einem schwenkbar daran gelagerten Schwenkteil, insbesondere zur schwenkbaren Lagerung und Verbindung von Kraftfahrzeugbauteilen, insbesondere von beweglichen Bauteilen im Bereich eines Cabriolet-Verdecks oder eines Schiebedachs.

### Hintergrund

Ein Cabriolet-Verdeck eines Cabriolet-Fahrzeuges ist typischerweise zwischen einer ausgeklappten und den Fahrzeuginnenraum überspannenden Stellung und einer kompakten Ablagestellung überführbar, in welcher das Verdeckgestänge einen möglichst minimalen Platzbedarf aufweist.

Ein solches Cabriolet-Verdeck ist beispielsweise in der DE 10 2007 029 813 A1 beschrieben. Das Verdeck weist ein vorderes Verdeckteil auf, welches gelenkig an weiteren seitlichen Gestängeteilen angebunden ist. Ein derartiges Gestänge weist eine Vielzahl einzelner Gelenke und Gelenkachsen auf. Die Gelenkbauteile sind dabei überwiegend aus Metall gefertigt, um den im bestimmungsgemäßen Gebrauch auftretenden mechanischen Belastungen standhalten zu können.

Montage- und fertigungstechnisch gestalten sich diese, oftmals mehrere Gelenkbauteile umfassenden Gelenkanordnungen als relativ aufwendig und kostenintensiv. Zwischen den schwenkbar zueinander gelagerten Gelenkbauteilen müssen geeignete Abstands- oder Gleitelemente, wie Abstandshülsen oder Scheiben eingesetzt werden, bevor die Bauteile selbst durch Bildung einer Nietverbindung schwenkbar miteinander verbunden werden.

Drehgelenkanordnungen sind ferner im Bereich eines Schiebedachs eines Kraftfahrzeugs vorgesehen. So kann ein Aussteller einer Schiebedachführung über einen Hebel schwenkbar am Dach eines Kraftfahrzeugs gelagert sein, um beispielsweise das in Fahrtrichtung hinten liegende Ende eines Schiebedachdeckels in eine angehobene Stellung zu überführen. In einer solchen Belüftungsstellung oder ausgehend von einer solchen Belüftungsstellung kann das Schiebedach entgegen der Fahrtrichtung des Kraftfahrzeugs von einer geschlossenen in eine geöffnete Stellung verschoben werden.

So beschreibt die EP 2 251 174 A2 eine Drehgelenkanordnung mit einem mittels Spritzguss gefertigten Gelenkbolzen. Eine derartige Drehgelenkanordnung ist kostengünstig und besonders fertigungsrationell herstellbar.

Demgegenüber liegt nun die Aufgabe zugrunde, eine Drehgelenkanordnung bereitzustellen, die eine besonders hohe Widerstandsfähigkeit gegenüber senkrecht zu einer Drehachse auftretenden Querkräften oder Scherkräften aufweist. Die Stabilität der Drehgelenkanordnung und ihre Dauerhaltbarkeit sollen verbessert, Herstellungskosten und Herstellungsaufwand weiter verringert werden.

### Erfindungen und vorteilhafte Ausgestaltungen

Diese Aufgabe wird mit einer Drehgelenkanordnung, mit einem Schiebedach und mit einem Verfahren zur Herstellung einer Drehgelenkanordnung gemäß den Merkmalen der unabhängigen Patentansprüche gelöst. Vorteilhafte Ausgestaltungen sind dabei jeweils Gegenstand abhängiger Patentansprüche.

Demgemäß ist eine Drehgelenkanordnung mit einem Basisteil und mit einem Schwenkteil vorgesehen. Das Basisteil und das Schwenkteil sind zueinander drehbar gelagert. Das Schwenkteil weist eine Durchgangsöffnung auf. Auch das Basisteil weist zumindest eine Durchgangsöffnung auf. Die Durchgangsöffnungen von Basisteil und Schwenkteil sind zumindest bereichsweise zueinander überlappend angeordnet. Mithin sind die Durchgangsöffnungen von Schwenkteil und Basisteil fluchtend zueinander angeordnet.

Die Drehgelenkanordnung weist ferner einen mittels Spritzguss gefertigten Gelenkbolzen auf, welche einen strukturverstärkenden und in eine Kunststoffumspritzung eingebetteten Einsatz aufweist. Der Gelenkbolzen verbindet das Basisteil und das Schwenkteil drehbar miteinander. Der Einsatz ist unter Bildung und Einhaltung eines vorgegebenen Zwischenraums zu einem Öffnungsrand oder zu einer Öffnungswand der Durchgangsöffnungen in den Durchgangsöffnungen des Basisteils und des Schwenkteils angeordnet. Der mittels Spritzguss gefertigte Gelenkbolzen ist in den Durchgangsöffnungen von Schwenkteil und Basisteil angeordnet.

Er ist typischerweise drehbar mit zumindest einem von Schwenkteil und Basisteil in Eingriff. Er kann am anderen von Schwenkteil und Basisteil fest und unbeweglich angeordnet sein. Es ist auch denkbar, dass der mittels Spritzguss gefertigte Gelenkbolzen bezüglich des Schwenkteils als auch bezüglich des Basisteils drehbar gelagert ist. Der Zwischenraum zwischen den Durchgangswänden und dem Einsatz kann ringförmig und/oder bezogen auf die Längserstreckung des Gelenkbolzens radialsymmetrisch ausgestaltet sein. Der Einsatz hat somit keinen direkten Kontakt weder zum Basisteil noch zum Schwenkteil. Er ist ausschließlich über die in den Durchgangsöffnungen von Basisteil und Schwenkteil gehalten.

Typischerweise steht der mittels Spritzguss gefertigte Gelenkbolzen mit einer Kunststoffumspritzung formschlüssig mit dem Öffnungsrand der Durchgangsöffnung des Schwenkteils und mit dem Öffnungsrand der Durchgangsöffnung des Basisteils in Eingriff.

Dadurch dass der Einsatz unter Einhaltung eines Zwischenraums zum Öffnungsrand oder zur Öffnungswand der Durchgangsöffnungen von Basisteil und Schwenkteil angeordnet ist kann jener Zwischenraum vollständig mit der den Gelenkbolzen bildenden Kunststoffumspritzung ausgefüllt werden. Dies ermöglicht eine überaus variable Ausgestaltung und geometrische Formgebung des Einsatzes. Dieser kann entsprechend den an die Drehgelenkanordnung gestellten mechanischen Lastanforderungen ausgebildet sein. Mithin kann der Einsatz durch seine beabstandete Anordnung zu den Öffnungsrändern oder Öffnungswänden von Basisteil und Schwenkteil jedwede beliebige geometrische Kontur und geometrische Abmessungen aufweisen. Mithin kann der Einsatz eine Längserstreckung entlang der Drehachse des Gelenkbolzens aufweisen, die größer ist als der Innenquerschnitt einer Durchgangsöffnung von Basisteil und Schwenkteil.

Die separate bzw. von Basisteil und Schwenkteil separierte Ausgestaltung des Einsatzes ermöglicht eine vergleichsweise lange längserstreckte Ausgestaltung des Einsatzes, sodass sich dieser womöglich vollständig durch die fluchtend zueinander angeordneten Durchgangsöffnungen von Basisteil und Schwenkteil erstreckt. Etwaige auf die Drehgelenkanordnung einwirkenden Scherkräfte oder Querkräfte, welche zum Beispiel senkrecht zur Drehachse des Gelenkbolzens am Schwenkteil oder am Basisteil anliegen, können auf diese Art und Weise besser und zuverlässiger abgefangen, bzw. in das jeweils andere Teil der Drehgelenkanordnung übertragen werden. Insoweit kann die Drehgelenkanordnung eine erhöhte Widerstandsfähigkeit gegenüber Querkräften und Scherkräfte aufweisen, welche in etwa senkrecht zur Drehachse des Gelenkbolzens wirken.

Das Basisteil, das Schwenkteil und der Einsatz des Gelenkbolzens können jeweils aus Metall gefertigt sein. Das Basisteil, das Schwenkteil und der Einsatz sind als separate Bauteile bereitgestellt. Der Einsatz kann aus einem anderen Material als das Basisteil und/oder als das Schwenkteil gefertigt sein und aus einem Material bestehen, welches sich vom Material des Basisteils und/oder vom Material des Schwenkteils unterscheidet.

Es kann insbesondere vorgesehen sein, dass der Zwischenraum zwischen dem Einsatz und der Öffnungswand, d.h. der Innenwand der Durchgangsöffnung zylindrisch ausgestaltet ist und sich ununterbrochen von der Außenseite zur Innenseite von Basisteil und/oder Schwenkteil erstreckt. Es ist aber auch denkbar, dass der Zwischenraum zumindest partiell, punktuell oder bereichsweise unterbrochen ist.

Es ist insbesondere denkbar, dass der Einsatz punktuell und/oder abschnittsweise unmittelbar an einer Innenseite der Öffnungswand anliegt. Insbesondere kann die Öffnungswand von zumindest einem von Basisteil und Schwenkteil radial nach innen ragende Vorsprünge aufweisen, deren radial nach innenragende Enden außen an einem Außenumfang des Einsatzes unmittelbar anliegen. Auf diese Art und Weise kann der Einsatz direkt in der Durchgangsöffnung von Schwenkteil oder Basisteil radial zentriert werden. Der Außenumfang des Einsatzes kann vollkommen kontaktlos zur Öffnungswand der Durchgangsöffnungen von Basisteil und Schwenkteil sein. Der Außenumfang des Einsatzes kann aber auch punktuell an einer Öffnungswand von Schwenkteil oder Basisteil anliegen.

Nach einer weiteren Ausgestaltung der Drehgelenkanordnung ist der Zwischenraum zwischen dem Einsatz und den Öffnungswänden der Durchgangsöffnungen von der Kunststoffumspritzung ausgefüllt. Die Kunststoffumspritzung des Einsatzes bildet sozusagen den Gelenkbolzen, welcher formschlüssig mit dem Basisteil und/oder mit dem Schwenkteil verbindbar ist. Die formschlüssige Verbindung des Gelenkbolzens an zumindest einem von Basisteil und Schwenkteil kann allein durch die Kunststoffumspritzung gebildet sein.

Nach einer weiteren Ausgestaltung weist der Einsatz einen zylindrischen Metallkörper auf. Mithin sind die Durchgangsöffnungen durch das Basisteil und durch das Schwenkteil jeweils radialsymmetrisch bzw. kreisrund ausgestaltet. Der Einsatz kann beispielsweise einen Stahlkörper zylindrischer Grundgeometrie aufweisen. Ein derartiger Metallkörper kann etwaige Querkräfte oder Scherkräfte, die vom Schwenkteil auf das Basisteil wirken, aufnehmen und sicher in das Basisteil ableiten. Ebenso kann der Metallkörper umgekehrt etwaige vom Basisteil in Richtung Schwenkteil wirkende Querkräfte oder Scherkräfte aufnehmen und diese vom Basisteil auf das Schwenkteil übertragen.

Nach einer weiteren Ausgestaltung ist der Einsatz radialzentriert in den Durchgangsöffnungen von Basisteil und Schwenkteil angeordnet. Eine radialzentrierte Anordnung des Einsatzes ermöglicht eine konstant gleichbleibende Übertragung von Querkräften oder Scherkräften unabhängig von der jeweiligen Winkelstellung zwischen Basisteil und Schwenkteil.

Nach einer weiteren Ausgestaltung durchsetzt der Einsatz die Durchgangsöffnungen vollständig. Der Einsatz erstreckt sich insoweit von einer Außenseite des Basisteils bis zu einer Außenseite des Schwenkteils, wobei die Außenseite des Basisteils dem Schwenkteil abgewandt ist und wobei die Außenseite des Schwenkteils dem Basisteil abgewandt ist. Eine derartige Längserstreckung des Einsatzes minimiert die mechanischen Belastungen auf die Kunststoffumspritzung bei Auftreten von Querkräften oder Scherkräften. Die Stabilität und Widerstandsfähigkeit der Drehgelenkanordnung kann mit zunehmender Längserstreckung des Einsatzes gesteigert werden.

Nach einer weiteren Ausgestaltung weist der Einsatz eine erste axiale Endfläche auf. An einem gegenüberliegenden Längsende weist der Einsatz eine zweite axiale Endfläche auf. Die axialen Endflächen können sich in etwa parallel zu den Außenseiten von Basisteil und Schwenkteil erstrecken. Es kann insbesondere vorgesehen sein, dass die Längserstreckung des Einsatzes, insbesondere die Axialrichtung des Einsatzes in etwa parallel zu einer Flächennormale von Basisteil und Schwenkteil verläuft. Die axialen Endflächen oder Stirnflächen des Einsatzes ermöglichen eine platzsparende Ausgestaltung der Drehgelenkanordnung.

Im Bereich der axialen Endfläche des Einsatzes kann die Kunststoffumspritzung vergleichsweise dünnwandig ausgestaltet sein. Mithin ist denkbar, dass die Kunststoffumspritzung im Bereich der axialen Endflächen des Einsatzes unterbrochen ist oder eine Durchgangsöffnung aufweist. Diese kann aufgrund einer notwendigen Fixierung des Einsatzes während des Spritzgussprozesses und während der Bildung der Kunststoffumspritzung erforderlich werden.

Nach einer weiteren Ausgestaltung ist zumindest eine von erster und zweiter Endfläche des Einsatzes bündig oder fluchtend zu zumindest einer Außenseite von Basisteil oder Schwenkteil angeordnet. Eine derartige Ausgestaltung ermöglicht eine besonders flache Bauform der Drehgelenkanordnung in Axialrichtung, d. h. parallel zu den Flächennormalen von Basisteil und Schwenkteil. Gleichermaßen kann durch die fluchtende oder bündige Anordnung der axialen Endflächen eine ausreichende mechanische Festigkeit, Steifigkeit und Widerstandsfähigkeit gegen Querkräfte und Scherkräfte bereitgestellt werden.

Nach einer weiteren Ausgestaltung ist vorgesehen, dass zumindest eine von erster und zweiter Endfläche um einen vorgegebenen Abstand von einer Außenseite von Basisteil oder Schwenkteil hervorsteht. Eine derartige Ausgestaltung baut zwar in Axialrichtung etwas größer auf. Sie kann aber eine nochmals gesteigerte Widerstandsfähigkeit gegen Querkräfte und Scherkräfte bereitstellen. Es ist hierbei ferner denkbar, dass die Endflächen vergleichsweise dünnwandig von der Kunststoffumspritzung überzogen sind oder das die Endflächen zumindest bereichsweise frei liegen.

Nach einer weiteren Ausgestaltung sind die erste Endfläche und/oder die zweite Endfläche des Einsatzes vollständig von der Kunststoffumspritzung umschlossen. Eine vollständige Einbettung des Einlegers in die Kunststoffumspritzung kann diese gegen Umwelteinflüsse, so etwa gegen Feuchtigkeit und Korrosion schützen. Mithin ist es nicht erforderlich, den Einleger rostfrei auszugestalten. Durch eine vollständige Einbettung in die Kunststoffumspritzung kann der Einleger inhärent gegen korrodierende Einflüsse geschützt werden. Der Einleger selbst kann dabei aus einem verhältnismäßig kostengünstigen Material gefertigt oder bereitgestellt werden.

Nach einer weiteren Ausgestaltung weist die Kunststoffumspritzung einen gegenüber der Durchgangsöffnung des Basisteils radial verbreiterten ersten Kopfabschnitt auf, welcher an einer Außenseite des Basisteils anliegt. Mithin liegt der erste Kopfabschnitt an der außenliegenden Öffnungsberandung der Durchgangsöffnung des Basisteils an. Auf diese Art und Weise kann die Kunststoffumspritzung, mithin der gesamte Gelenkbolzen zumindest in einer Richtung axial am Basisteil fixiert werden.

Nach einer Weiterbildung weist die Kunststoffumspritzung einen gegenüber der Durchgangsöffnung des Schwenkteils radial verbreiterten zweiten Kopfabschnitt auf, welcher an einer Außenseite des Schwenkteils anliegt. Mithin liegt der zweite Kopfabschnitt an der außenliegenden Öffnungsberandung der Durchgangsöffnung des Schwenkteils an. Auf diese Art und Weise kann die Kunststoffumspritzung, mithin der gesamte Gelenkbolzen zumindest in einer weiteren Richtung axial am Schwenkteil fixiert werden.

Das Basisteil und das Schwenkteil können mit ihren einander zugewandten Innenseiten direkt aneinander anliegen. Die an den Außenseiten zur Anlage gelangenden ersten und zweiten Kopfabschnitte der Kunststoffumspritzung sorgen alsdann für eine vollständige axiale Fixierung der Kunststoffumspritzung am Basisteil und am Schwenkteil. Sie bewirken ferner eine axiale Fixierung von Basisteil und Schwenkteil relativ zueinander.

Nach einer weiteren Ausgestaltung weist die Kunststoffumspritzung ferner ein Distanzstück auf, welches sich axial zwischen dem Basisteil und dem Schwenkteil erstreckt und welches insbesondere radial nach außen von einer innenliegenden Öffnungsberandung der Durchgangsöffnungen von Basisteil und Schwenkteil hervorsteht. Das Distanzstück fungiert sozusagen als Zwischenstück oder als Unterlegscheibe und verringert die Reibung zwischen Basisteil und Schwenkteil.

Das Distanzstück, insbesondere seine Axialerstreckung und seine radiale Erstreckung können durch entsprechende Formgebung einer Spritzgussform variabel an vorgegebene Anforderungen angepasst werden.

Nach einer weiteren Ausführungsform der Drehgelenkanordnung sind an zumindest einer Öffnungswand der Durchgangsöffnung des Basisteils oder des Schwenkteils zumindest zwei in Umfangsrichtung der Öffnungswand voneinander beabstandete und radial nach innen ragende Vorsprünge ausgebildet oder angeordnet, welche mit einem Außenumfang des Einsatzes in Eingriff bringbar sind. Die Vorsprünge können einstückig mit dem Basisteil oder Schwenkteil verbunden sein. Insbesondere ist denkbar, dass die Durchgangsöffnung des Basisteils und/oder des Schwenkteils durch Ausstanzen gebildet wird. Durch Anpassung einer entsprechenden Stanzform kann ohne besondere Mehrkosten eine Durchgangsöffnung in einem von Basisteil und Schwenkteils gebildet werden, welche hinsichtlich der radial nach innen ragenden Vorsprünge von einer kreisrunden Form abweicht.

Mittels der Vorsprünge kann der Einsatz radial zentriert in derjenigen Durchgangsöffnung von Schwenkteil und Basisteil vorfixiert oder angeordnet werden, welche mit den Vorsprüngen versehen ist. Mittels der Vorsprünge kann der Einsatz im Herstellungsprozess, etwa nach Einlegen des Schwenkteils und des Basisteils in eine Spritzgussform, in der mit den Vorsprüngen versehenen Durchgangsöffnung vorfixiert werden. Für den nachfolgenden und die Kunststoffumspritzung bildenden Spritzgussprozess kann der Einsatz auf diese Art und Weise an zumindest einem von Basisteil und Schwenkteil sowohl radial als auch axial fixiert sein.

Es ist dabei insbesondere vorgesehen, dass bei Bereitstellung von zwei Vorsprüngen diese Vorsprünge diametral gegenüberliegend an der Innenwand bzw. an der Öffnungswand der Durchgangsöffnung angeordnet sind. Von Vorteil sind an der Öffnungswand bzw. an der Innenwand der Durchgangsöffnung von einem von Basisteil und Schwenkteil zumindest drei Vorsprünge angeordnet oder ausgebildet. Auf diese Art und Weise kann eine besonders gute radiale Zentrierung des zum Beispiel bolzenartig ausgestalteten Einsatzes in der betreffenden Durchgangsöffnung erfolgen. Bei vorsehen dreier Vorsprünge können diese in Umfangsrichtung um 120° voneinander, mithin äquidistant zueinander beabstandet sein.

Nach einem weiteren Aspekt ist ferner ein Schiebedach eines Kraftfahrzeugs mit zumindest einer zuvor beschriebenen Drehgelenkanordnung vorgesehen. Die Drehgelenkanordnung kann beispielsweise in eine Ausstellermechanik des Schiebedachs integriert sein, mittels welcher beispielsweise ein in Fahrtrichtung hinten liegender Teil eines Schiebedachdeckels aus einer geschlossenen und bündig zur Dachkontur verlaufenden Stellung in eine gegenüber der Dachkontur angehobene Stellung überführbar ist. Die Drehgelenkanordnung ist aber auch anderweitig an einem Schiebedach oder z.B. an einem Cabriolet-Verdeck verwendbar.

Nach einem weiteren Aspekt betrifft die Erfindung ferner ein Verfahren zur Herstellung einer zuvor beschriebenen Drehgelenkanordnung. Hierbei ist vorgesehen, zunächst ein Basisteil und ein Schwenkteil in eine Spritzgussform einzulegen. Alsdann ist ein strukturverstärkender Einsatz in zueinander überdeckend oder fluchtend zueinander angeordneten Durchgangsöffnungen des Basisteils und des Schwenkteils zu positionieren und zu fixieren. In einem weiteren Verfahrensschritt wird ein das Basisteil und das Schwenkteil miteinander verbindendender Gelenkbolzen an die Durchgangsöffnungen von Basisteil und Schwenkteil in einem Spritzgussvorgang angespritzt. Im Zuge des Spritzgussvorgangs wird der eigentliche Gelenkbolzen gebildet und der strukturverstärkende Einsatz wird in eine Kunststoffumspritzung eingebettet bzw. von einer Kunststoffumspritzung umhüllt.

Es sei an dieser Stelle angemerkt, dass das Verfahren zur Herstellung einer zuvor beschriebenen Drehgelenkanordnung ausgestaltet ist. Insoweit gelten sämtliche im Hinblick auf die Drehgelenkanordnung offenbarten und beschriebenen Merkmale, Vorteile und Funktionen in gleicher Art und Weise für das Verfahren zur Herstellung einer Drehgelenkanordnung und umgekehrt.

Nach einer weiteren Ausgestaltung des Verfahrens wird der typischerweise als Metallkörper ausgestaltete Einsatz während des Spritzgussprozesses vollständig in eine Kunststoffumspritzung eingebettet. Er kann hierdurch quasi versiegelt und gegenüber externen Einflüssen, so etwa gegenüber Korrosionseinflüssen effektiv geschützt werden.

Die erfindungsgemäße Drehgelenkanordnung kann durch die Verbindung von Kunststoff- und Metallkomponenten als Outsert-Teil ausgebildet sein. Durch die Verwendung eines Kunststoffgelenkbolzens kann auch in vorteilhafter Weise auf die bislang teils notwendige Verwendung etwaiger Schmierstoffe weitgehend verzichtet werden. Ein Kunststoffgelenkbolzen wirkt ferner den negativen Auswirkungen von durch Korrosion bedingten Alterungserscheinungen, etwa einer durch Rostbildung hervorgerufenen Schwergängigkeit des Drehgelenks entgegen.

Der Gelenkbolzen kann nach einer weiteren Ausgestaltung ein thermoplastisches Elastomer, oder ein Materialgemisch aufweisen, welche zumindest ein thermoplastisches Elastomer umfasst. Der Gelenkbolzen, insbesondere seine Kunststoffumspritzung kann zum Beispiel Polyoxymethylen (POM) aufweisen. POM zeichnet sich insbesondere durch eine ausreichend hohe Festigkeit und Steifigkeit sowie durch niedrige Reibwerte in einem weiten Temperaturbereich aus und kann den mechanischen Belastungsanforderungen, insbesondere im Bereich des Kraftfahrzeugbaus genügen.

### Kurzbeschreibung der Figuren

Weitere Ziele, Merkmale sowie vorteilhafte Anbindungsmöglichkeiten einer Drehgelenkanordnung mit einem mittels Spritzguss gefertigten Gelenkbolzen werden in der nachfolgenden Beschreibung eines Ausführungsbeispiels erläutert. Hierbei zeigen:
- Fig. 1: eine perspektivische und schematische Darstellung einer Drehgelenkanordnung,
- Fig. 2: einen Querschnitt entlang A-A durch die Drehgelenkanordnung gemäß Fig. 1,
- Fig. 3: einen Querschnitt durch die Drehgelenkanordnung gemäß Fig. 2 jedoch in einer Explosionsdarstellung,
- Fig. 4: eine etwas vergrößerte Darstellung der Drehgelenkanordnung gemäß Fig. 2,
- Fig. 5: weitere Ausgestaltung der Drehgelenkanordnung im Querschnitt,
- Fig. 6: eine Anordnung von Basisteil, Schwenkteil und strukturverstärkendem Einsatz vor Durchführung eines Spritzgussprozesses,
- Fig. 7: ein Flussdiagramm des Verfahrens zur Herstellung der Drehgelenkanordnung,
- Fig. 8: eine weitere Ausgestaltung von Basisteil, Schwenkteil und Einsatz vor Durchführung eines Spritzgussprozesses und
- Fig. 9: eine Draufsicht auf das Basisteil gemäß Fig. 8

### Detaillierte Beschreibung

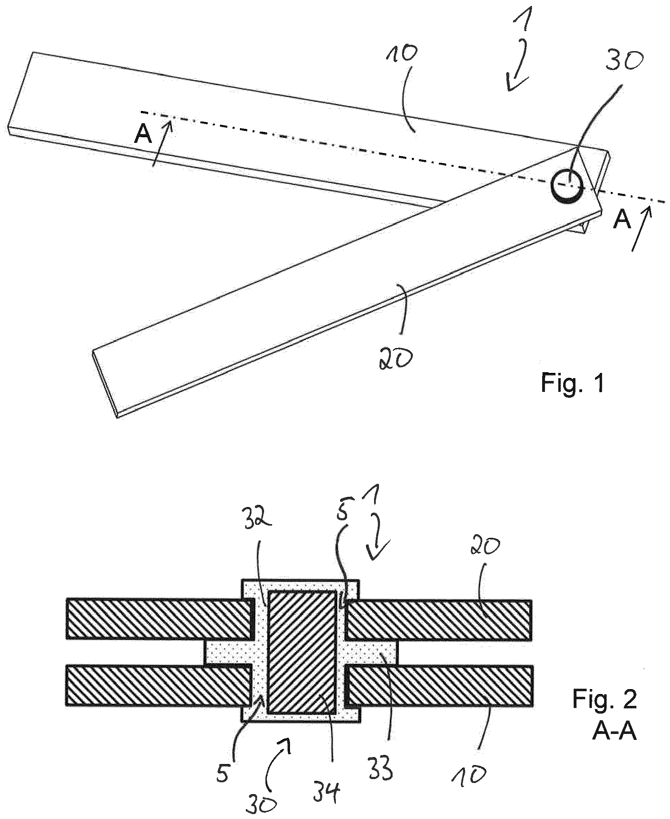

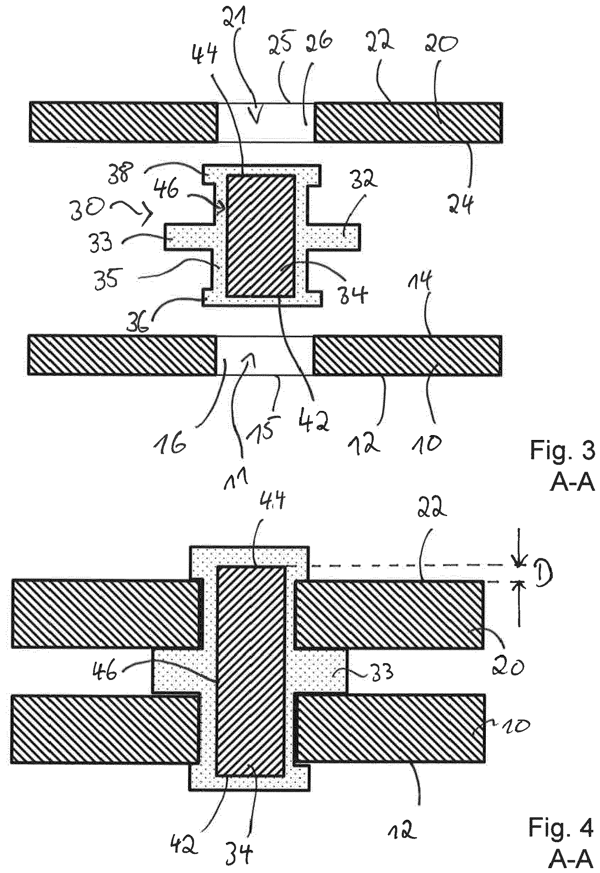

Die in Fig. 1 in perspektivischer Darstellung gezeigte Drehgelenkanordnung 1 weist ein Basisteil 10 und ein schwenkbar hieran gelagertes Schwenkteil 20 auf. Das Basisteil 10 und das Schwenkteil 20 sind mittels eines mittels Spritzguss gefertigten Gelenkbolzens 30 schwenkbar miteinander verbunden. In den Fig. 2 und 3 ist ein Querschnitt durch die Drehgelenkanordnung 1 gemäß Fig. 1 entlang A-A gezeigt.

Das Basisteil 10 weist eine Durchgangsöffnung 11 auf. Das Schwenkteil 20 weist eine hierzu fluchtend angeordnete Durchgangsöffnung 21 auf. Die Durchgangsöffnungen 11, 21 sind im Wesentlichen fluchtend oder zumindest bereichsweise überdeckend zueinander angeordnet. Durch die Durchgangsöffnungen 11, 21 erstreckt sich der Gelenkbolzen 30. Der Gelenkbolzen 30 weist einen innenliegenden strukturverstärkenden Einsatz 34, z.B. in Form eines Metalleinlegers auf, welcher von einer Kunststoffumspritzung 32 umgeben ist.

Im vorliegenden Ausführungsbeispiel umschließt die Kunststoffumspritzung 32 den Einsatz 34 vollständig. Wie insbesondere in den Darstellungen der Figuren 2 und 4 gezeigt befindet sich der Einsatz 34 unter Einhaltung eines vorgegebenen Zwischenraums 5 innerhalb oder inmitten der Durchgangsöffnungen 11, 21 von Basisteil 10 und Schwenkteil 20. Der Zwischenraum 5 ist dabei vollständig von der Kunststoffumspritzung 32 ausgefüllt. Die Kunststoffumspritzung 32 umschließt die Außenkontur oder den Außenumfang 46 des Einsatzes 34 vollständig. Der Einsatz 34 kann aus einem Material gefertigt sein, welches sich vom Material des Basisteils 10 oder des Schwenkteils 20 unterscheidet. Zumindest einer von Basisteil 10 und Schwenkteil 20 kann als Metallteil ausgestaltet sein. Auch können sowohl das Basisteil 10 und das Schwenkteil 20 als Metallteil ausgestaltet sein.

Die vollständige Umschließung des strukturverstärkenden Einsatzes 34 mit einer Kunststoffumspritzung 32 bewirkt zugleich einen korrosionshemmenden oder korrosionsverhindernden Schutz für den Einsatz 34. Dieser muss folglich nicht aus einem korrosionsfesten Metall gefertigt sein. Dies kann sich vorteilhaft auf die Herstellungs- und Bearbeitungskosten für den Einsatz 34 auswirken.

Dadurch, dass der strukturverstärkende Einsatz 34 keinen direkten Kontakt mit dem Basisteil 10 und dem Schwenkteil 20 hat, kann er allein über die zum Beispiel radialsymmetrisch ausgestaltete Umspritzung 32 formschlüssig in den Durchgangsöffnungen 11, 21 von Basisteil 10 und Schwenkteil 20 gehalten werden. Dies ermöglicht ferner eine schwenkbare Lagerung der Kunststoffumspritzung 32 bezüglich des Basisteils 10 und des Schwenkteils 20. Eine Reibung zwischen dem Schwenkteil 20 und dem Basisteil 10 während einer Schwenkbewegung kann auf diese Art und Weise weiter verringert werden.

Das Basisteil ist drehbar und formschlüssig mit der Kunststoffumspritzung 32, mithin mit dem gesamten Gelenkbolzen 30 in Eingriff. Ferner ist auch das Schwenkteil 20 formschlüssig und drehbar mit der Kunststoffumspritzung 32 in Eingriff.

Anhand der Figuren 2 bis 4 ist ferner gezeigt, dass die Kunststoffumspritzung 32 ein in etwa zylindrisches Mittelstück 35 aufweist. An gegenüberliegenden axialen Enden weist die Kunststoffumspritzung 32 einen ersten radial verbreiterten Kopfabschnitt 36 auf, welcher eine axiale Endfläche 42 des Einsatzes 34 umschließt. Gegenüberliegend weist die Kunststoffumspritzung 32 einen zweiten radial verbreiterten Kopfabschnitt 38 auf, welcher eine axiale Endfläche 44 des Einsatzes 34 umschließt. In der Endmontagekonfiguration und nach Fertigung des mittels Kunststoffspritzguss erzeugten Gelenkbolzens 30 steht der Kopfabschnitt 38 mit einer Öffnungsberandung 35 an der Außenseite 22 des Schwenkteils 20 in Eingriff. Der andere Kopfabschnitt 36 steht mit einer Öffnungsberandung 15 und mit der Außenseite 12 des Basisteils 10 in Eingriff. Die Außenseite 12 des Basisteils 10 ist dem Schwenkteil 20 abgewandt. Die Außenseite 22 des Schwenkteils 20 ist dem Basisteil 10 abgewandt.

Die Durchgangsöffnung 11 des Basisteils 10 weist eine Öffnungswand 16 auf. Der Zwischenraum 5 zwischen der Öffnungswand 16 und dem Einsatz 34 ist vollständig von der Umspritzung 32 ausgefüllt. Gleichermaßen ist auch die Durchgangsöffnung 21 des Schwenkteils 22 mit einer Öffnungswand 26 versehen. Der Zwischenraum 5 zwischen dieser Öffnungswand 26 und dem Einsatz 34 ist ebenfalls vollständig von der Umspritzung 32 ausgefüllt.

In der Ausgestaltung gemäß der Figuren 2 und 4 ist ferner erkennbar, dass in der Endmontagekonfiguration die axiale Endfläche 44 des Einsatzes 34 um ein vorgegebenes Maß, etwa um einen Abstand D von der Außenseite 22 des Schwenkteils 20 hervorsteht. Gleichermaßen kann auch die axiale Endfläche 42 des Einsatzes 34 um ein vorgegebenes Maß, bzw. um einen Abstand D von einer Außenseite 12 des Basisteils 10 hervorstehen. Ein geringfügiger Überstand des Einsatzes 34 von den Außenseiten 12, 22 von Basisteil 10 und Schwenkteil 20 kann sich für die Übertragung von Querkräften und/oder Scherkräften als vorteilhaft erweisen.

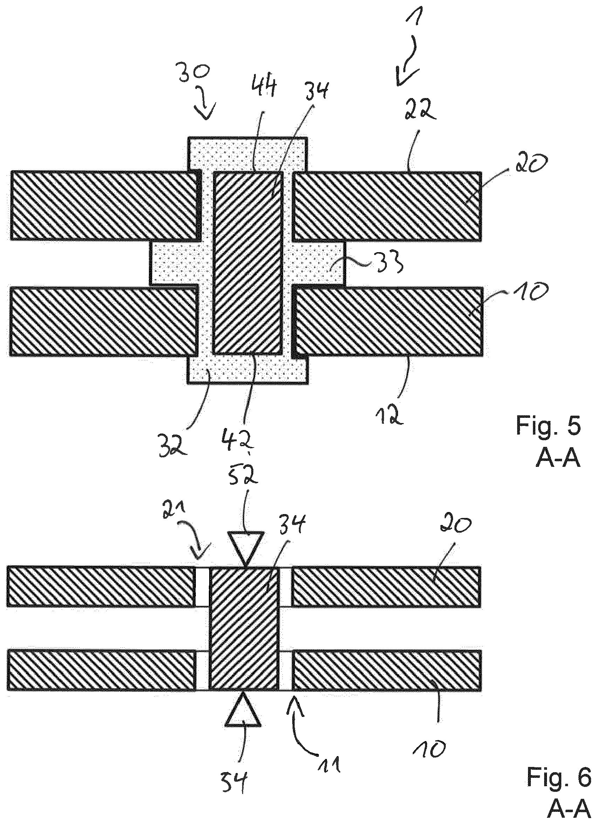

In der hiervon abweichenden Ausgestaltung einer Drehgelenkanordnung 1 gemäß Fig. 5 ist vorgesehen, dass die axialen Endflächen 42, 44 des Einsatzes 34 im Wesentlichen bündig oder fluchtend zu den Außenseiten 12, 22 von Basisteil 10 und Schwenkteil 20 angeordnet sind. Eine derartige Ausgestaltung kann sich im Hinblick auf geometrische oder platzsparende Anforderungen als vorteilhaft erweisen. Mithin kann hierdurch die axiale Erstreckung des Gelenkbolzens 30 auf ein Minimum reduziert werden, wenngleich dies in Fig. 5 nicht explizit gezeigt ist.

Die Kunststoffumspritzung 32 kann ferner ein Distanzstück 33 aufweisen, welches sich radial nach außen vom Mittelstück 35 erstreckt. In der Endmontagekonfiguration gemäß der Figuren 2 oder 4 befindet sich das Distanzstück 33 axial zwischen dem Basisteil 10 und dem Schwenkteil 20. Es kann axial an der Innenseite 24 des Schwenkteils 20 als auch axial an der Innenseite 14 des Basisteils 10 anliegen. Das Distanzstück 33 kann quasi als eine Art reibungsmindernde Unterlegscheibe oder als axialer Abstandshalter für die Anordnung von Basisteil 10 und Schwenkteil 20 fungieren.

Die Darstellung gemäß Fig. 6 zeigt eine sich im Zuge des Herstellungsprozesses ergebende zeitweise Anordnung von Basisteil 10, Schwenkteil 20 und Einsatz 34. Vor Durchführung eines den Gelenkbolzen 30 bildenden Spritzgussprozesses werden das Basisteil 10 und das Schwenkteil 20 in einer Spritzgussform positioniert. Die Durchgangsöffnungen 11, 21 von Basisteil 10 und Schwenkteil 20 werden hierbei fluchtend zueinander bzw. bereichsweise überdeckend zueinander angeordnet. Der strukturverstärkende Einsatz 34 wird durch die beiden Durchgangsöffnungen 11, 21 hindurch bzw. in diesem Durchgangsöffnungen 11, 21 angeordnet. Der Einsatz 34 wird alsdann mittels Fixierungen 52, 54 zum Beispiel axial in den Durchgangsöffnungen 11, 21 fixiert, damit dieser während des Spritzgussprozesses in Bezug auf das Basisteil 10 und das Schwenkteil 20 lagestabil bleibt.

In einem nachfolgenden Spritzgussprozess wird die Kunststoffumspritzung 32 um den Einsatz 34 gebildet, wodurch das Basisteil 10 und das Schwenkteil 20 axial und zueinander drehbar fixiert werden.

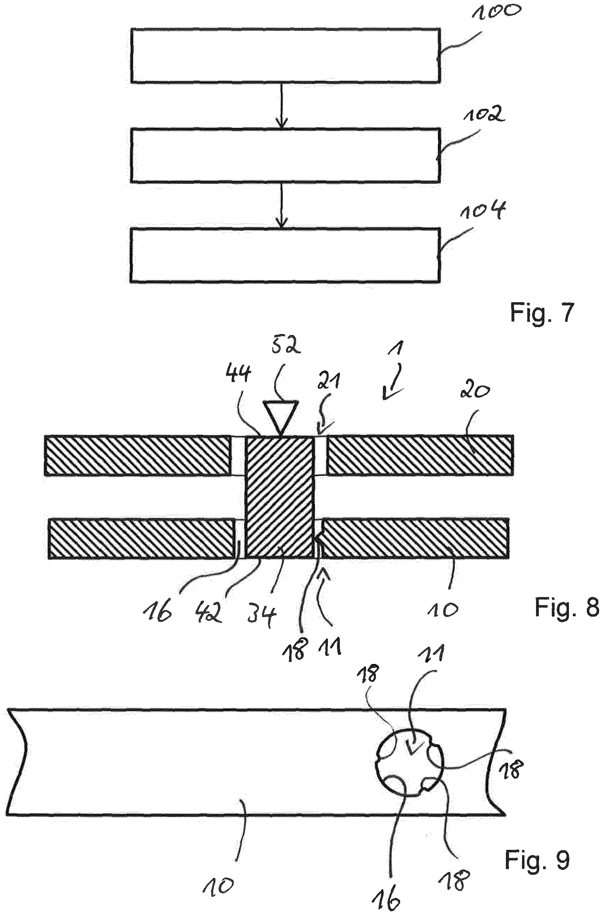

In Fig. 7 ist schließlich jener Herstellungsprozess schematisch skizziert. In einem Schritt 100 werden das Basisteil 10 und das Schwenkteil 20 in einer Spritzgussform positioniert, bzw. in eine Spritzgussform eingelegt. Im nachfolgenden Schritt 102 wird der strukturverstärkende Einsatz 34 in den Durchgangsöffnungen 11, 21 von Basisteil 10 und Schwenkteil 20 angeordnet und fixiert. Im nachfolgenden Schritt 104 wird der Gelenkbolzen 30 durch Bildung einer Kunststoffumspritzung 32 um den Einsatz 34 herum mittels Spritzguss gefertigt.

In den Figuren 8 und 9 ist ein weiteres Ausführungsbeispiel der Drehgelenkanordnung 1 gezeigt, bei welcher die Durchgangsöffnung 11 des Basisteils 10 mit insgesamt 3 radial nach innenragenden Vorsprüngen 18 versehen ist. Die Fig. 8 zeigt einer Vormontagestellung in der Spritzgussform im Querschnitt während Fig. 9 eine Draufsicht auf das Basisteil 10 im Bereich seiner Durchgangsöffnung 11 zeigt.

Die Vorsprünge 18 sind einstückig mit dem Basisteil 10 verbunden. Insoweit ist die Durchgangsöffnung 11 bzw. deren Öffnungswand 16 streng genommen nicht exakt kreisförmig. Die Innenwand oder Öffnungswand 16 der Durchgangsöffnung 11 weist drei in etwa in Umfangsrichtung äquidistant zueinander angeordnete Vorsprünge 18 auf. Die Vorsprünge 18 können eine vergleichsweise kurze Axialerstreckung aufweisen. Sie können in Axialrichtung, d. h. in Richtung der Drehachse der Drehgelenkanordnung 1 kürzer als die Materialstärke des Basisteils 10 ausgestaltet sein. Sie können sich aber auch kontinuierlich über die gesamte Materialstärke des Basisteils 10, mithin über die gesamte Axialerstreckung der Durchgangsöffnung 11 erstrecken.

Letztere Ausgestaltung ist insbesondere dann von Vorteil, wenn das Basisteil 10 als Stanzbauteil gefertigt ist. Im Bereich der Vorsprünge 18 ist der Zwischenraum 5 zwischen dem Einsatz 34 und der Öffnungswand 16 punktuell unterbrochen. Herstellungstechnisch kann sich eine derartige Ausgestaltung jedoch als vorteilhaft erweisen, da der Einsatz 34 mittels der Vorsprünge 18 radial in der Durchgangsöffnung 11 zentrierbar und fixierbar ist. Er kann auch entsprechend der Haftreibung zwischen den Vorsprüngen 18 und dem Außenumfang 46 des Einsatzes 34 quasi axial am Basisteil 10 fixiert bzw. gesichert sein. Insoweit kann auch auf eine in Fig. 6 gezeigte untere Fixierung verzichtet werden. Lediglich die obere Endfläche 44 des Einsatzes 34 ist mittels einer gesonderten Fixierung 52 in der Spritzgussform für den Spritzgussprozess der Kunststoffumspritzung 32 zu fixieren.

Es sind natürlich auch andere Ausgestaltungen denkbar, bei welchen die Durchgangsöffnung 11 des Basisteils 10 frei von derartigen Vorsprüngen 18 ist und bei welchen solche Vorsprünge 18 beispielsweise an der Öffnungswand 26 der Durchgangsöffnung 21 des Schwenkteils ausgebildet sind.

### Bezugszeichenliste

- 1: Drehgelenkanordnung
- 5: Zwischenraum
- 10: Basisteil
- 11: Durchgangsöffnung
- 12: Außenseite
- 14: Innenseite
- 15: Öffnungsrand
- 16: Öffnungswand
- 20: Schwenkteil
- 21: Durchgangsöffnung
- 22: Außenseite
- 24: Innenseite
- 25: Öffnungsrand
- 26: Öffnungswand
- 30: Gelenkbolzen
- 32: Umspritzung
- 33: Distanzstück
- 34: Einsatz
- 35: Mittelstück
- 36: Kopfabschnitt
- 38: Kopfabschnitt
- 42: Endfläche
- 44: Endfläche
- 46: Außenumfang
- 52: Fixierung
- 54: Fixierung

## Patentansprüche

1. Drehgelenkanordnung mit einem Basisteil (10) und mit einem Schwenkteil (20), die zueinander schwenkbar gelagert sind und welche jeweils eine Durchgangsöffnung (11, 21) aufweisen, die zumindest bereichsweise zueinander überlappend angeordnet sind und mit einem mittels Spritzguss gefertigten Gelenkbolzen (30), welcher das Basisteil (10) und das Schwenkteil (20) drehbar miteinander verbindet, wobei der Gelenkbolzen (30) einen strukturverstärkenden und in eine Kunststoffumspritzung (32) eingebetteten Einsatz (34) aufweist, welcher unter Bildung eines vorgegebenen Zwischenraums (5) zu einem Öffnungsrand (15, 25) oder einer Öffnungswand (16, 26) der Durchgangsöffnungen (11, 21) in den Durchgangsöffnungen (11, 21) des Basisteils (10) und des Schwenkteils (20) angeordnet ist.

2. Drehgelenkanordnung nach Anspruch 1, wobei der Zwischenraum (5) zwischen dem Einsatz (34) und den Öffnungswänden (16, 26) der Durchgangsöffnungen (11, 21) von der Kunststoffumspritzung (32) ausgefüllt ist.

3. Drehgelenkanordnung nach Anspruch 1 oder 2, wobei der Einsatz (34) einen zylindrischen Metallkörper aufweist.

4. Drehgelenkanordnung nach Anspruch 3, wobei der Einsatz (34) radial zentriert in den Durchgangsöffnungen (11, 21) angeordnet ist.

5. Drehgelenkanordnung nach einem der vorhergehenden Ansprüche, wobei der Einsatz (34) die Durchgangsöffnungen (11, 21) vollständig durchsetzt.

6. Drehgelenkanordnung nach einem der vorhergehenden Ansprüche, wobei der Einsatz (34) eine erste axiale Endfläche (42) aufweist und an einem gegenüberliegenden Ende eine zweite axial Endfläche (44) aufweist.

7. Drehgelenkanordnung nach Anspruch 6, wobei zumindest eine von erster und zweiter Endfläche (42, 44) bündig oder fluchtend zu zumindest einer Außenseite (12, 22) von Basisteil (10) oder Schwenkteil (20) angeordnet ist.

8. Drehgelenkanordnung nach Anspruch 6, wobei zumindest eine von erster und zweiter Endfläche (42, 44) um einen vorgegebenen Abstand (D) von einer Außenseite (12, 22) von Basisteil (10) oder Schwenkteil (20) hervorsteht.

9. Drehgelenkanordnung nach einem der vorhergehenden Ansprüche 6 bis 8, wobei die erste Endfläche (42) und/oder die zweite Endfläche (44) vollständig von der Kunststoffumspritzung (32) umschlossen sind.

10. Drehgelenkanordnung nach einem der vorhergehenden Ansprüche, wobei die Kunststoffumspritzung (32) einen gegenüber der Durchgangsöffnung (11) des Basisteils (10) radial verbreiterten ersten Kopfabschnitt (36) aufweist, welcher an einer Außenseite (12) des Basisteils (10) anliegt.

11. Drehgelenkanordnung nach einem der vorhergehenden Ansprüche, wobei die Kunststoffumspritzung (32) einen gegenüber der Durchgangsöffnung (21) des Schwenkteils (20) radial verbreiterten zweiten Kopfabschnitt (38) aufweist, welcher an einer Außenseite (22) des Schwenkteils (20) anliegt.

12. Drehgelenkanordnung nach einem der vorhergehenden Ansprüche, wobei an einer Öffnungswand (16) der Durchgangsöffnung (11) des Basisteils (10) oder an einer Öffnungswand (26) der Durchgangsöffnung (21) des Schwenkteils (20) zumindest zwei in Umfangsrichtung der Öffnungswand (16, 26) voneinander beabstandete und radial nach innen ragende Vorsprünge (18) ausgebildet sind, welche mit einem Außenumfang (46) des Einsatzes (34) in Eingriff bringbar sind.

13. Schiebedach eines Kraftfahrzeugs mit zumindest einer Drehgelenkanordnung (1) nach einem der vorhergehenden Ansprüche.

14. Verfahren zur Herstellung einer Drehgelenkanordnung nach einem der vorhergehenden Ansprüche 1 bis 12, mit den Schritten:
- Einlegen eines Basisteils (10) und eines Schwenkteils (20) in eine Spritzgussform,
- Positionieren und Fixieren eines strukturverstärkenden Einsatzes (34) in zueinander überdeckend angeordneten Durchgangsöffnungen (11, 21) des Basisteils (10) und des Schwenkteils (20),
- Anspritzen eines das Basisteil (10) und das Schwenkteil (20) miteinander verbindenden Gelenkbolzens (30) an die Durchgangsöffnungen (11, 21) in einem Spritzgussvorgang.

15. Verfahren nach Anspruch 14, wobei der Einsatz (34) vollständig in eine Kunststoffumspritzung (32) eingebettet wird.
